# EUROPEAN PATENT SPECIFICATION

(11) **EP 2 874 394 B1**
(45) Date of publication and mention of the grant of the patent: **12.07.2017**
(21) Application number: 14198230.6
(22) Date of filing: 20.05.2011
(51) Int. Cl.: H04N 7/20, H04N 7/10, H04N 21/61, H04N 21/214, H04H 20/63, H04N 21/4363, H04H 40/90

(54) **System for transmission and distribution broadcast digital data**
System zur Übertragung und Verteilung von digitalen Rundfunkdaten
Système de transmission et de distribution de données numériques diffusées

(30) Priority: 21.05.2010 GB 201008478
(43) Date of publication of application: 20.05.2015
(62) Divisional of application: 11725492.0
(73) Proprietor: Global Invacom Ltd., Stevenage, Hertfordshire SG1 2UG (GB)
(72) Inventor: Stafford, Gary, Stevenage, Hertfordshire SG1 2UG (GB)
(74) Representative: Wood, Graham

(56) References cited:
- WO-A1-01/56297
- WO-A1-2004/082291
- WO-A1-2010/147806
- WO-A2-2007/096617
- FR-A1- 2 854 015
- US-A1- 2009 232 077
- BUSSON P ET AL: "A 1 GHz Digital Channel Multiplexer for Satellite Outdoor Unit", IEEE JOURNAL OF SOLID-STATE CIRCUITS, IEEE SERVICE CENTER, PISCATAWAY, NJ, USA, vol. 44, no. 1, 1 January 2010 (2010-01-01), pages 84-94, XP011286563, ISSN: 0018-9200

## Description

The invention to which this application relates is a system which allows digital data, typically that which is representative of television and/or radio channels, to be broadcast from one or a plurality of locations and then transmitted via the system to a plurality of receiving locations at which the data can be processed and the television and/or radio channels then be available for selection by users at their location.

Although the present invention will be described principally with regard to broadcast systems which utilise one or more satellites to which the digital data is transmitted and then relayed to the receiving locations, it should be appreciated that one or more features of the system of the invention, could be utilised in other broadcast systems such as cable or terrestrial broadcast systems.

Conventionally, data transmitted via the satellite transmitted digital data systems, are received at each of the receiving locations by an antenna which includes a dish which is oriented to collect the digital data which is broadcast from the appropriate satellite or satellites, and at least one low noise block (LNB) is provided to process the received data which is then carried from the antenna at the receiving location, to at least one broadcast data receiver, also referred to as a set top box. The digital data is transmitted to the set top box in an RF mode and at the set top box, at least one tuner is provided and other decoding means are provided to decode and process the received digital data into a format to allow generation of user selected television and/or radio channels.

A number of set top boxes may be provided within the same receiving location which can mean that each of the set top boxes includes at least one tuner and the same are desired to be positioned within the location at different points i.e. in different rooms. This can lead to the provision of a number of set top boxes and the need for additional cabling to be provided between the set top boxes so as to allow each set top box to receive the broadcast data.

The problem of the provision of a plurality of set top boxes is exacerbated when the receiving location is a building including multiple dwelling units, rather than a single home or dwelling unit such as, for example, a block of apartments. Conventionally, each of the apartments would be required to have a satellite antenna, an LNB and their own cabling system. The same is also a problem with regard to multiple dwelling units when the receiving location is in the form of a housing estate or town wherein once again, each premises is required to have its own set top box, satellite antenna and so on.

The applicant has identified this problem and in their own copending previous application EP1987611, have identified means whereby a single receiving antenna and LNB can be provided to receive the appropriate broadcast data signals and, from the LNB, the signals can be passed to means for converting the RF data signals into an optical format suitable to be carried along an optical fibre network. The optical fibre network is then linked to each of the receiving locations whereupon at each receiving location, the signal is reformatted into an RF mode so that the data signals can be presented to the set top box at each of the receiving locations in a conventional mode. The conversion of the digital data into an optical form means that a single satellite antenna and LNB can be located and provided for use to receive and process digital data which can be used by a plurality of dweller units within a block of apartments or in a village or town. This therefore greatly reduces the amount of receiving apparatus which is required to be provided while ensuring that all the television and radio channels, and typically digital radio and terrestrial television signals, are available for selection by each of the users in the dwelling units.

While this system offers a significant advantage in operation, there is still a need to provide one or a plurality of set top boxes at each of the receiving locations even though the same may be fed by a common antenna and distribution system. The set top boxes take up space within the receiving locations and, if a number of set top boxes are provided at various points within the receiving location, significant additional cabling is required to be used.

Documents FR2854015, WO20040082291 and Busson P et al "A 1 GHz Digital Channel Multiplexer for Satellite Outddor Unit" IEEE JOURNAL OF SOLID STATE CIRCUITS, IEEE Service Center, Piscataway, NJ, USA vol.44 no 1, 1 January 2010 (2010-01-01) pages 84-94, XP011286563, ISSN:0018-9200, disclose data distribution systems to allow data to be distributed to a number of points from a receiving location via at least one broadcast data receiver provided at at least one point in the receiving location to receive the data from the receiving means and process the same and the data is then distributed to other points in the receiving location from the broadcast data receiver. These documents do not disclose the provision of data processing means at the receiving location at which there is provided at least one LNB with means to allow the data signals to be transformed into a format for onward transmission.

The aim of the present invention is therefore to provide a data transmission system which allows the received digital data to be processed and transmitted to a receiving location and for the same to be processed and provided for selection by the user at points in the receiving location in a more efficient manner.

In a first aspect of the invention, there is provided apparatus for the receipt of data signals, said apparatus including, at a receiving location, at least one antenna, a Low Noise Block (LNB) and data processing means and a data distribution network for distribution of the data signals therefrom, said data signals received in a RF format at the antenna in a number of transport streams including a plurality of video and/or audio data streams, said apparatus including means to change the received data signals into an optical format for distribution and the data processing means includes a plurality of tuners, a demodulator, a data stream combiner, and a signal receiver, a plurality of points or locations are connected by the data distribution network, and user selection means are provided at each of said plurality of points or locations and via which a user is able to select a particular television and/or radio programme to view and/or listen to at their respective point or location via a display screen and/or speakers and/or be stored in a storage medium for subsequent retrieval, selection signals representative of users selections made via the respective user selection means are passed to the tuners of the data processing means, and the data processing means identifies the selection made by each user, identifies the required data signals to generate the user selected television or radio programme and, for said selection, separates the required data signals from the received data signals and distributes the said required data signals from the data processing means via the data distribution network to the respective user point or location from which that user selection was received and/or to said storage medium, characterised in that the data processing means are located at the said receiving location and at which the LNB includes means to convert the said data signals into the optical format.

In a further embodiment the data is provided in an optical format from the receiving means to the at least one point at the receiving location.

In one embodiment, the data processing means are located downstream of the LNB.

In one embodiment, the at least one point within the receiving location to which the data signals are transmitted, is capable of distributing the data signals in an optical format or in another embodiment in a non-optical format, to further points within the receiving location.

Typically, the data signals at the points in the receiving location are then received at a monitor and/or speaker at said points to allow the generation of television and/or radio channels, with the data received at the points typically selected to be that which is required in order to generate a television or radio programme which has been selected by the user from a range of available television and/or radio programmes at the location of said point to be viewed and/or listened to. Typically the selection is made via selection means such as a control unit in the form of an electrical device which allows user interaction with the apparatus at the point.

In one embodiment, the distribution means within the receiving location, is an Ethernet distribution system. The system may, in one embodiment, already be installed within the premises.

In one embodiment, the data processing means are located at the receiving location such that the data signals received from the antenna and LNB, are sent to the same via an optical distribution system, and the data signals are then processed accordingly at the data processing means and then transmitted to the points throughout the receiving location as required.

Typically the data which is received is provided as a series of transport streams with typically each of said transport streams including a plurality of video and/or audio data streams such as an MPEG format data streams, H.264 format data stream or other data stream format from which user selectable radio and/or television channels can be generated and from which, in turn, a user can select to view and/or listen to a television or radio programme.

It will therefore be appreciated that in accordance with this invention, there is no need for a conventional set top box to be provided at the receiving location as the provision of the data processing means at some stage between the receiving means and the distribution system for data signals within the receiving location, allows the data signals to be processed accordingly but does not necessarily require that the data signals be reformatted into an RF mode for processing.

In a further embodiment there is provided a digital data transmission system, said digital data representing television and/or radio channels which are broadcast, said system including at least one receiving antenna for the data signals which are transmitted via satellite and an LNB, said data signals which are received via the LNB, converted into an optical format for processing and transmission and wherein the data remains in said optical format throughout the distribution thereof to one or more points at a receiving location.

In one embodiment, and in whichever aspect of the invention, the data which is received via the at least one antenna of the LNB can be passed through a distribution system so as to make the same available to a plurality of points at a receiving location which are all then supplied with data from the common receiving means.

In one embodiment the distribution system allows the distribution of other services in addition to the television and radio channels, such as, high speed internet access, and/or VOIP. It can also support the provision of two way communication.

Specific embodiments of the invention will now be described with reference to the accompanying drawings; wherein
Figure 1a illustrates, in a schematic manner, the data transmission system in accordance with one embodiment of the invention;
Figure 1b illustrates, in a schematic manner, a data transmission system; and
Figures 2a and b illustrate the system of the invention in detail in accordance with an embodiment of the invention.

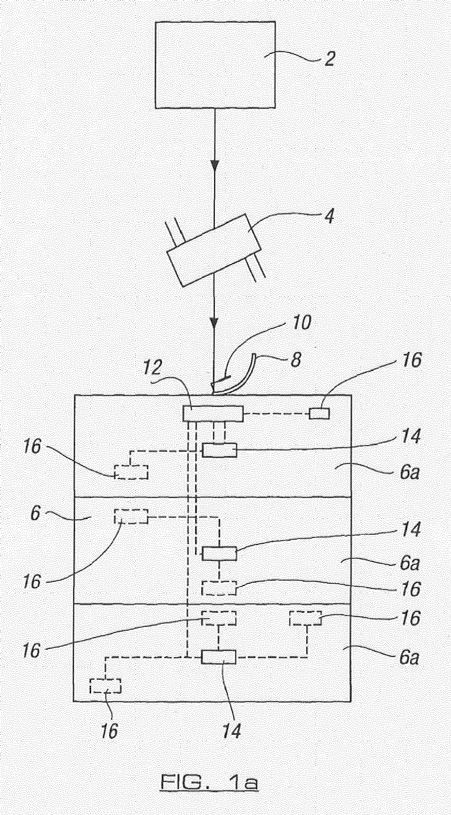

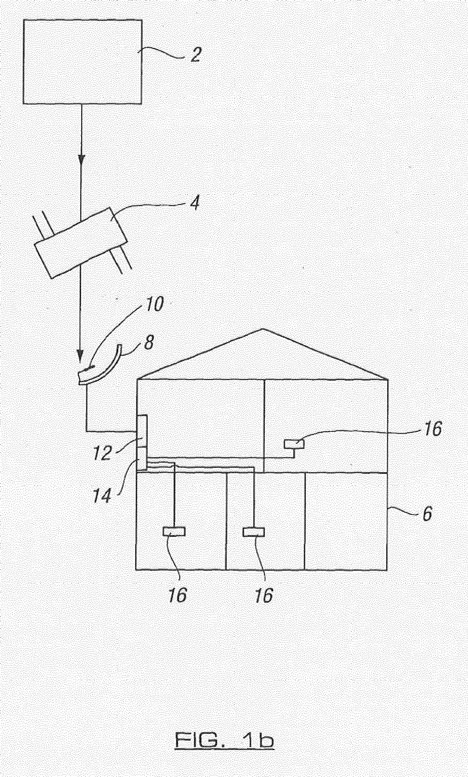

Referring firstly to Figures 1a and b, there is illustrated embodiments of a digital data broadcast system in accordance with the invention in which there is provided a broadcast or headend location 2 from which digital data is broadcast. It should be appreciated that the data which is broadcast can be provided from a plurality of locations although only one is shown here for ease of illustration. The data which is broadcast is transmitted to at least one satellite 4 which serves to collect and transmit onwardly the digital data to one or more receiving locations, one of which, 6, is shown in Figure 1a in which the receiving location 6 comprises multiple dwelling units 6a which may, for example, be provided within a block of apartments. In Figure 1b a single receiving location 6 is illustrated in which there are provided a series of rooms 6a.

In Figure 1a the distribution system may be used to distribute the received data signals from the receiving means antenna 8 and LNB 10 at the receiving location 6, to each of the dwelling units 6a so as to allow all of the data to be available at each of the dwelling units 6a for selection and the generation of television or radio channels via display means or speakers provided at a plurality of points or locations 16 within each of the units, with the said points selected by the user and typically at each point there is provided a television and/or radio. An optical and/or non-optical data signal distribution format may be used for at least part of the data distribution system. In Figure 1b the distribution system is used to distribute data to selected points 16 within the premises 6.

In accordance with the invention, the provision of a conventional data processing apparatus such as a set top box in each of the dwelling units, 6, 6a is rendered unnecessary by the provision of data processing means 12 which are located intermediate the receiving means 8, 10 and the points 16 at which display means and/or speakers in the receiving location units 6, 6a are provided. Furthermore, the data processing means can be provided to process data in an optical format if it is received in that format and therefore does not require the data to be reformatted back to an RF mode for processing, as would conventionally be the case.

At each of the receiving location dwelling units 6a, 6, there is provided an Ethernet or other form of distribution system including module 14. In one embodiment, as shown, the distribution system allows the optical or non-optical format data signals which are received to be distributed to the user selected points 16 within the receiving location dwelling units 6, 6a and be available for generation on the display means or speakers located at those points as appropriate and in response to the user selection made for television and/or radio programming at the respective points. It should be appreciated that the television or radio programming selected by users at the respective points may differ from point to point and the required data signals for each of the selections can be sent to and utilised at each of the points. Alternatively, the data can be distributed to the points 16 from the data processing means 12 in a non-optical format using CAT5 Ethernet or similar cables or via a wireless transmission system.

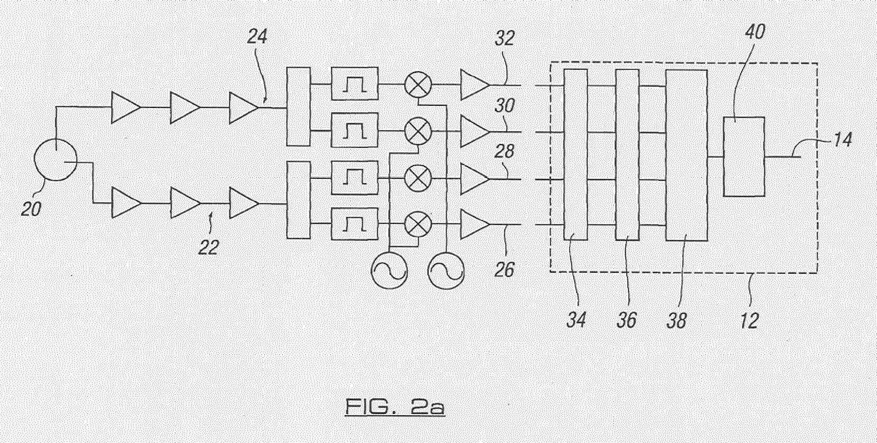

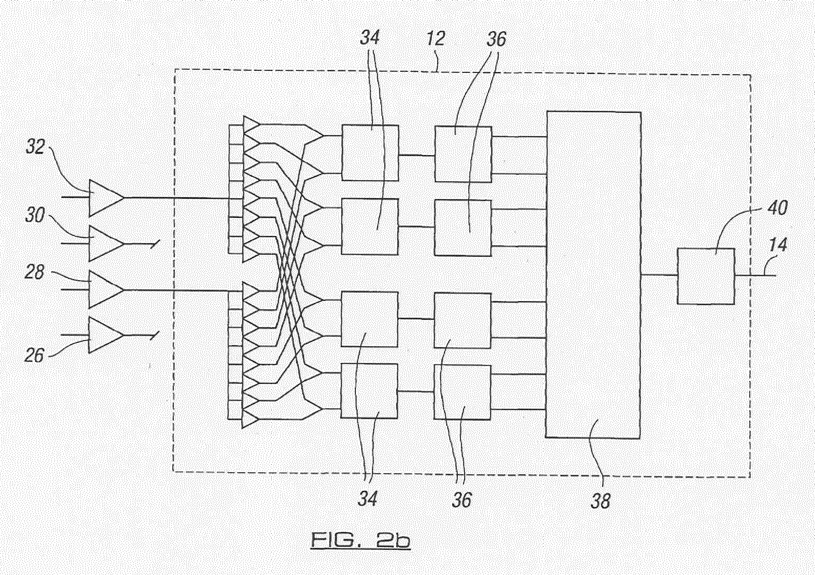

Turning now to Figures 2a and b, there is illustrated a more specific form of the invention in accordance with one embodiment. In Figure 2a, there is illustrated the apparatus which is provided downstream of the LNB 10 of the receiving means and which includes a waveguide 20, a processing system for the orthogonal components 22, 24, of the received data signals in order to generate four feeds; 26 - High Band horizontal; 28 - Whole Band horizontal; 30 - High Band vertical and 32 - Whole Band vertical. The data processing means 12 are provided in the module shown which includes tuners 34, demodulator 36, a data stream combiner 38, and Ethernet PHY receiver chip 40. The data processing means 12 can be provided downstream from the receiving means, 8,10, and preferably remotely from the LNB, in order to avoid any operational temperature issues. In one embodiment when the system is sued for a single receiving location the data processing means 12 are located within the single premises 6a and connected to the module 14 therein. Alternatively, if the receiving locations are a series of dwelling units 6a in an apartment block or a housing estate the data processing means 12 may be provided at a centralised location intermediate the receiving means and the modules 14 for each of the premises 6a.

Typically the data processing means 12 will include a plurality of tuners as are deemed to be required to ensure or allow the opportunity for the users in each of the receiving locations 6a and/or at each of the points in a receiving location are able to select to watch a particular programme and there will be a tuner available to respond and tune to obtain the data from the data streams which is required to generate the selected programme and for that data to then be transmitted to the location 6a from which the request was made and then subsequently be distributed via module 14 to point 16 within the premises from which the selection was made.. It will therefore be appreciated that a selection signal will be passed from the receiving locations 6a to the data processing means which is indicative of the user selection made and the appropriate data which is required can then be obtained and transmitted. The selection signal is carried along the distribution system but in the reverse direction to that of the data signals for the data fro the programming. In one embodiment sufficient tuners will be provided in order to allow a recording function to be provided for each of the receiving locations such that in addition or instead of the selection signal representing programming which is to be watched at that time, the selection signal may represent data which is to be recorded in a storage medium and then be available to the user from the specific receiving location at a later date. In one embodiment the storage medium is located at the data processing means for each premises or alternatively is provided as part of the apparatus at each receiving location. In a further embodiment the data processing means can be connected to existing or conventional set top boxes at the output therefrom in order to utilise the tuners and/or storage medium provided therewith.

In one embodiment terrestrial broadcast services can be fed into the data processing means such that these services are also made available to the receiving locations.

At each of the points 16 a means is provided or utilised to allow the user interaction with the distribution system. This means could for example, be the television set itself or a PC, using a Windows or DLNA communication means, an IPAD or any device which can be controlled to generate a selection signal indicative of programming to be viewed or stored. Other means include a programme guide interaction system and device which includes the "backend" of the set top box and which therefore allows some form of processing of the received data such as decoding of the received data at the point 16 in order to render the same available to be viewed or listened to rather than simply receiving the data in an already fully processed format which is the other option.

The Figures 2a and b therefore illustrate how the data processing means 12 can be used and provided to supply the data distribution module 14 which is used at each receiving location, in this case the series of premises 6a, to supply the distribution system within each of the premises 6a and thereby allow the data signals to be carried along the distribution system, such as an Ethernet distribution system, to each of the points 16 in the unit 6a at which the data is required to be available for generation of television and/or radio. The data signals may be carried from module 14 to the points 16 in an optical or non-optical format as can be selected at the time of designing the system. At the points 16 there may be provided a means to allow user interaction with the system. The user interaction is typically of a form to allow a particular television or radio or auxiliary service, such as a television guide or EPG to be generated from the data which is received at the data processing means 12 and distributed onwardly therefrom.

Once the data has passed through the data processing means 12 it is supplied to the modules 14 in each of the dwelling units 6a for any subsequent processing and remains in the format for onward distribution therefrom.

At the receiving means 8,10 the data signals can be processed into an optical format and retained in that format as the data is subsequently supplied from module 14 to each of the points 16 within units 6a. The data is therefore retained in the optical format as it is distributed to the points 16 in each of the dwelling units 6a. Alternatively from the receiving means 8, 10, the data signals can be carried to the data processing means 12 in a non-optical format using co-axial or similar cable and to the module 14 and, after the module 14, is distributed in an optical or non-optical format. Thus the format or combination of formats in which the data signals are carried to and from the data processing means can be selected to suit particular installation requirements

Thus the following are representative of the possible format combinations which can be used to transmit the data signals in accordance with the invention.

**Receiving means to Data processing means to Point**

| | | |
|---|---|---|
| 1. | non-optical | non-optical |
| 2 | non-optical | optical |
| 3. | optical | optical |
| 4 | optical | non-optical |
| 5 | non-optical | wireless |
| 6 | optical | wireless |

Typically when the optical format is used this is achieved by using fibre optic cabling or plastic fibre cabling as appropriate.

## Claims

1. Apparatus for the receipt of data signals, said apparatus including, at a receiving location (6), at least one antenna (8), a Low Noise Block (LNB)(10) and data processing means (12) and a data distribution network for distribution of the data signals therefrom, said data signals received in a RF format at the antenna (8) in a number of transport streams including a plurality of video and/or audio data streams, said apparatus including means to change the received data signals into an optical format for distribution and the data processing means includes a plurality of tuners (34), a demodulator (36), a data stream combiner (38), and a signal receiver (40), a plurality of points or locations (6a;16)are connected by the data distribution network, and user selection means are provided at each of said plurality of points or locations (6a;16) and via which a user is able to select a particular television and/or radio programme to view and/or listen to at their respective point or location (6a;16) via a display screen and/or speakers and/or be stored in a storage medium for subsequent retrieval, selection signals representative of users selections made via the respective user selection means are passed to the tuners (34) of the data processing means (12), and the data processing means identifies the selection made by each user, identifies the required data signals to generate the user selected television or radio programme and, for said selection, separates the required data signals from the received data signals and distributes the said required data signals from the data processing means (12) via the data distribution network to the respective user point or location (6a;16) from which that user selection was received and/or to said storage medium, **characterised in that** the data processing means (12) are located at the said receiving location (6) and at which the LNB (10) includes means to convert the said data signals into the optical format.

2. Apparatus according to claim 1 wherein the data signals are provided in an optical format at least between the data processing means (12) and the said points or locations (6a,16) and/or between the receiving means (6) and the data processing means (12).

3. Apparatus according to claim 1 wherein the data is carried by an Ethernet cable between the data processing means (12) and the said points or locations (6a,16).

4. Apparatus according to claim 1 wherein the receiving means comprise at least one antenna (8) and at least one LNB (10).

5. Apparatus according to claim 4 wherein the data processing means (12) are located downstream of the LNB (10).

6. Apparatus according to claim 1 wherein the LNB (10) includes means for converting the received data signals which are received in an RF mode, into an optical format for onward transmission.

7. Apparatus according to claim 1 wherein at least one of the points or locations (6a,16) is provided to transmit the received data signals via an Ethernet or wireless transmission means to further points or locations.

8. Apparatus according to claim 1 wherein a module is provided at a location or point at a premises to allow data received by the module to be distributed to further points or locations within the premises from which the user selection was made.

9. Apparatus according to claim 1 wherein the data distribution network allows the distribution of services in addition to television and radio programmes including either, or both, of high speed internet access, and/or VOIP.

10. Apparatus according to any of the preceding claims wherein the received selection signals from a plurality of users are simultaneously processed, the appropriate data signals selected and separated by the data processing means (12) and sent via the data distribution network to the respective user's point or location (6a,16).

11. Apparatus according to claim 1 wherein the antenna (8) and LNB (10) are common in that all of the data signals passed to the data processing means (12) and selectively transmitted to the data distribution network are obtained from said antenna (8)and LNB (10).

12. Apparatus according to claim 1 wherein a plurality of tuners are provided such that each tuner can deal with a particular user selection from a number of selections from the users of the apparatus simultaneously.

13. Apparatus according to claim 1 wherein a distribution module is provided at a premises to allow data received by the module to be distributed to the said point or location within the premises from which the user selection was made.

## Patentansprüche

1. Vorrichtung zum Empfangen von Datensignalen, wobei die genannte Vorrichtung an einem Empfangsort (6) wenigstens eine Antenne (8), einen rauscharmen Signalumsetzer (Low Noise Block (LNB)) (10) und eine Datenverarbeitungseinrichtung (12) und ein Datenverteilungsnetz zur Verteilung der Datensignale von ihm beinhaltet, wobei die genannten Datensignale in einem HF-Format in einer Anzahl von Transportströmen einschließlich mehreren Video- und/oder Audiodatenströmen an der Antenne (8) empfangen werden, wobei die genannte Vorrichtung eine Einrichtung zum Ändern der empfangenen Datensignale in ein optisches Format zur Verteilung beinhaltet und die Datenverarbeitungseinrichtung mehrere Tuner (34), einen Demodulator (36), einen Datenstrom-Combiner (38) und einen Signalempfänger (40) beinhaltet, wobei mehrere Punkte oder Orte (6a; 16) durch das Datenverarbeitungsnetz verbunden sind und an jedem der genannten mehreren Punkte oder Orte (6a; 16) Benutzerauswahlmittel bereitgestellt sind und über die ein Benutzer eine bestimmte Fernseh- und/oder Radiosendung zum Ansehen und/oder Anhören über einen Anzeigebildschirm und/oder Lautsprecher an seinem jeweiligen Punkt oder Ort (6a; 16) ansehen und/oder anhören und/oder zum späteren Abrufen in einem Speichermedium speichern kann, wobei Auswahlsignale, die für über das jeweilige Benutzerauswahlmittel getätigte Benutzerauswahlen repräsentativ sind, an die Tuner (34) der Datenverarbeitungseinrichtung (12) weitergeleitet werden und die Datenverarbeitungseinrichtung die von jedem Benutzer getätigte Auswahl erkennt, die erforderlichen Datensignale zum Erzeugen der vom Benutzer gewählten Fernseh- oder Radiosendung erkennt und für die genannte Auswahl die erforderlichen Datensignale von den empfangenen Datensignalen trennt und die genannten erforderlichen Datensignale von der Datenverarbeitungseinrichtung (12) über das Datenverarbeitungsnetz an den Punkt oder Ort (6a; 16) des jeweiligen Benutzers, von dem diese Benutzerauswahl empfangen wurde, und/oder an das genannte Speichermedium verteilt, **dadurch gekennzeichnet, dass** sich die Datenverarbeitungseinrichtungen (12) an dem genannten Empfangsort (6) befinden und wo der LNB (10) eine Einrichtung zum Umsetzen der genannten Datensignale in das optische Format beinhaltet.

2. Vorrichtung nach Anspruch 1, wobei die Datensignale wenigstens zwischen den Datenverarbeitungseinrichtungen (12) und den genannten Punkten oder Orten (6a, 16) und/oder zwischen den Empfangseinrichtungen (6) und den Datenverarbeitungseinrichtungen (12) in einem optischen Format bereitgestellt werden.

3. Vorrichtung nach Anspruch 1, wobei die Daten von einem Ethernetkabel zwischen der Datenverarbeitungseinrichtung (12) und den genannten Punkten oder Orten (6a; 16) übertragen werden.

4. Vorrichtung nach Anspruch 1, wobei die Empfangseinrichtungen wenigstens eine Antenne (8) und wenigstens einen LNB (10) aufweisen.

5. Vorrichtung nach Anspruch 4, wobei die Datenverarbeitungseinrichtungen (12) dem LNB (10) nachgeschaltet sind.

6. Vorrichtung nach Anspruch 1, wobei der LNB (10) ein Mittel zum Umsetzen der empfangenen Datensignale, die in einem HF-Modus empfangen werden, in ein optisches Format zur Weiterübertragung beinhaltet.

7. Vorrichtung nach Anspruch 1, wobei wenigstens einer der Punkte oder Orte (6a, 16) zum Übertragen der empfangenen Signale über eine Ethernet- oder drahtlose Übertragungseinrichtung an weitere Punkte oder Orte bereitgestellt ist.

8. Vorrichtung nach Anspruch 1, wobei ein Modul an einem Ort oder Punkt an einem Standort bereitgestellt ist, damit von dem Modul empfangene Daten an weitere Punkte oder Orte innerhalb des Standorts, von dem die Benutzerauswahl getätigt wurde, verteilt werden können.

9. Vorrichtung nach Anspruch 1, wobei das Datenverteilungsnetz die Verteilung von Diensten zusätzlich zu Fernseh- und Radiosendungen einschließlich hochschnellen Internetzugangs und/oder VOIP zulässt.

10. Vorrichtung nach einem der vorhergehenden Ansprüche, wobei die empfangenen Auswahlsignale von mehreren Benutzern gleichzeitig verarbeitet werden, wobei die zutreffenden Datensignale von der Datenverarbeitungseinrichtung (12) ausgewählt und getrennt werden und über das Datenverteilungsnetz an den Punkt oder Ort (6a, 16) des jeweiligen Benutzers gesendet werden.

11. Vorrichtung nach Anspruch 1, wobei die Antenne (8) und der LNB (10) insoweit gemeinsam genutzt werden, dass alle der an die Datenverarbeitungseinrichtung (12) weitergeleiteten und wahlweise an das Datenverteilungsnetz übertragenen Datensignale von der/dem genannten Antenne (8) und LNB (10) erhalten werden.

12. Vorrichtung nach Anspruch 1, wobei mehrere Tuner bereitgestellt sind, sodass jeder Tuner eine jeweilige Benutzerauswahl aus einer Anzahl von Auswahlen von den Benutzern der Vorrichtung gleichzeitig behandeln kann.

13. Vorrichtung nach Anspruch 1, wobei an einem Standort ein Verteilungsmodul bereitgestellt ist, damit von dem Modul empfangene Daten an den genannten Punkt oder Ort innerhalb des Standorts, von dem die Benutzerauswahl getätigt wurde, verteilt werden können.

## Revendications

1. Appareil pour la réception de signaux de données, ledit appareil incluant, au niveau d'un emplacement de réception (6), au moins une antenne (8), un bloc à faible bruit (LNB) (10) et des moyens de traitement de données (12) et un réseau de distribution de données pour assurer la distribution des signaux de données à partir de celui-ci, lesdits signaux de données étant reçus sous un format RF au niveau de l'antenne (8) dans un certain nombre de flux de transport incluant une pluralité de flux de données vidéo et/ou audio, ledit appareil incluant des moyens pour changer les signaux de données reçus dans un format optique en vue d'une distribution et les moyens de traitement de données incluant une pluralité de syntoniseurs (34), un démodulateur (36), un combinateur de flux de données (38), et un récepteur de signaux (40), une pluralité de points ou d'emplacements (6a ; 16) étant connectés par le réseau de distribution de données, et des moyens de sélection d'utilisateur étant prévus au niveau de chaque point ou emplacement parmi ladite pluralité de points ou d'emplacements (6a; 16) et par l'intermédiaire duquel un utilisateur est apte à sélectionner un programme télévisé et/ou radiophonique particulier à visionner et/ou écouter au niveau de son point ou emplacement (6a; 16) respectif via un écran d'affichage et/ou de haut-parleurs et/ou être stocké dans un support de stockage en vue d'une récupération subséquente, des signaux de sélection représentatifs des sélections de l'utilisateur faites par l'intermédiaire des moyens de sélection d'utilisateur respectifs étant acheminés aux syntoniseurs (34) des moyens de traitement de données (12), et les moyens de traitement de données identifiant la sélection faite par chaque utilisateur, identifiant les signaux de données requis pour générer le programme télévisé ou radiophonique sélectionné par l'utilisateur et, pour ladite sélection, séparant les signaux de données requis à partir des signaux de données reçus et distribuant lesdits signaux de données requis à partir des moyens de traitement de données (12) via le réseau de distribution de données jusqu'au point ou emplacement (6a ; 16) de l'utilisateur respectif à partir duquel cette sélection d'utilisateur a été reçue et/ou jusqu'audit support de stockage, **caractérisé en ce que** les moyens de traitement de données (12) sont localisés au niveau dudit emplacement de réception (6) et au niveau duquel le LNB (10) inclut des moyens pour convertir lesdits signaux de données en format optique.

2. Appareil selon la revendication 1, les signaux de données étant fournis dans un format optique au moins entre les moyens de traitement de données (12) et lesdits points ou emplacements (6a, 16) et/ou entre les moyens de réception (6) et les moyens de traitement de données (12).

3. Appareil selon la revendication 1, les données étant transportées par un câble Ethernet entre les moyens de traitement de données (12) et lesdits points ou emplacements (6a, 16).

4. Appareil selon la revendication 1, les moyens de réception comprenant au moins une antenne (8) et au moins un LNB (10).

5. Appareil selon la revendication 4, les moyens de traitement de données (12) étant localisés en aval du LNB (10).

6. Appareil selon la revendication 1, le LNB (10) incluant des moyens pour convertir les signaux de données reçus, qui sont reçus en mode RF, vers un format optique en vue d'une transmission par la suite.

7. Appareil selon la revendication 1, au moins un des points ou emplacements (6a, 16) étant prévu pour transmettre les signaux de données reçus via un moyen de transmission Ethernet ou sans fil jusqu'à des points ou emplacements supplémentaires.

8. Appareil selon la revendication 1, un module étant prévu au niveau d'un emplacement ou point dans un local pour permettre à des données reçues par le module d'être distribuées jusqu'à des points ou emplacements supplémentaires au sein des locaux à partir desquels la sélection d'utilisateur a été faite.

9. Appareil selon la revendication 1, le réseau de distribution de données permettant la distribution de services, en plus de programmes télévisés et radiophoniques, incluant l'accès haute vitesse à l'internet et/ou le VOIP, ou les deux.

10. Appareil selon l'une quelconque des revendications précédentes, les signaux de sélection reçus en provenance d'une pluralité d'utilisateurs étant traités simultanément, les signaux de données appropriés étant sélectionnés et séparés par les moyens de traitement de données (12) et envoyés via le réseau de distribution de données jusqu'au point ou emplacement (6a, 16) de l'utilisateur respectif.

11. Appareil selon la revendication 1, l'antenne (8) et le LNB (10) étant communs en ce sens que tous les signaux de données acheminés aux moyens de traitement de données (12) et transmis sélectivement au réseau de distribution de données sont obtenus à partir de ladite antenne (8) et dudit LNB (10).

12. Appareil selon la revendication 1, une pluralité de syntoniseurs étant prévus de telle sorte que chaque syntoniseur puisse prendre en charge une sélection d'utilisateur particulière parmi un certain nombre de sélections en provenance des utilisateurs de l'appareil en simultanéité.

13. Appareil selon la revendication 1, un module de distribution étant prévu au niveau d'un local pour permettre à des données, reçues par le module, d'être distribuées jusqu'audit point ou emplacement au sein des locaux à partir desquels la sélection d'utilisateur a été faite.
